Europäisches Patentamt

European Patent Office

Office européen des brevets

(11) Publication number: **0 128 659**
A1

# EUROPEAN PATENT APPLICATION

(21) Application number: 84303041.2

(22) Date of filing: 04.05.84

(51) Int. Cl.³: **G 01 T 1/00**, G 01 T 1/202, G 01 T 1/164

(30) Priority: 10.05.83 US 493250

(43) Date of publication of application: 19.12.84
Bulletin 84/51

(84) Designated Contracting States: DE GB NL

(71) Applicant: **Kabushiki Kaisha Toshiba, 72, Horikawa-cho Saiwai-ku, Kawasaki-shi Kanagawa-ken 210 (JP)**

(72) Inventor: **Duncan, Michael Zane, 129 South Edison Street, Elgin Illinois 60120 (US)**

(74) Representative: **Shindler, Nigel et al, BATCHELLOR, KIRK & EYLES 2 Pear Tree Court Farringdon Road, London EC1R 0DS (GB)**

(54) **A method of forming individual scintillator elements.**

(57) A method of forming individual scintillator elements for a crystal array comprising the steps of cleaving a crystal (10) to form these individual elements. Preferably, the crystal is formed of cadmium tungstate, zing tungstate, or sodium iodide activated with thallium. Preferably, the elements are of equal width and preferably the crystal is cubic in shape.

EP 0 128 659 A1

"A Method of Forming Individual Scintillator Elements"

The present invention relates to methods for producing individual crystal elements for an array, such as scintillator elements to be employed as part of a detector for an x-ray scanning apparatus.

Detector assemblies are used in x-ray scanning apparatus and the like for converting emissions from such apparatus into light, and of converting that light into resultant output signals. A material which is capable of converting such emissions into light is known as "scintillator". Known scintillators include, for example, crystals of cadmium tungstate, zinc tungstate, and sodium iodide activated with thallium.

Prior art detectors of this type include a plurality of equal-width elements of scintillator material positioned in an array one adjacent to another, with a photodetector device aligned with each individual scintillator element. As emitted ionising radiation strikes the array, the affected scintillator element gives off visible light which in turn is detected by the corresponding photodetector to generate an output signal indicative of the position and amplitude of that emission. Output signals of this nature may be collected and processed to provide a visual image of an object being bombarded by these emissions, or of an object giving off such emissions.

In the prior art, individual elements of scintillator material were formed from a main crystal block using multiple circular or wire saws and the like. After a cut has been made to form an element, the sides of the element must be polished using diamond slurries and polishing machines to produce the appropriate reflective surfaces on each element. In addition to sawing, elements may today be formed by grinding or lapping processes.

In each know prior art process of forming scintillator elements from a crystal, there are a number of substantial disadvantages. First, there is a loss of crystalline material due to kerf gap caused by sawing. There are harmful debris from such a process including sawdust, contaminated slurries, and other machining fluids or cleaning solvents. Exactness of size of each element is limited by the accuracy of the cut and the precision of the saw employed. Additionally, elements formed by conventional methodologies are subject to machining stress during the cutting, grinding, and/or polishing processes.

It is, accordingly, an object of the present invention to provide an improved method for forming individual elements of a crystal array.

More specifically, it is an object of the present invention to provide a method of forming individual elements for a crystal array which minimises the amount of lost crystalline material, minimises the expense and tools required to produce the elements, and maximises the smoothness of the reflective surfaces produced on the elements.

Additional objects and advantages of the invention will be set forth in part in the description which follows, and in part will be obvious from the description or may be learned by practice of the invention.

To achieve the foregoing objects, and in accordance with the purposes of the invention as embodied and broadly described herein, a method of forming individual elements for a crystal array is provided which comprises the step of cleaving a crystal to form those elements. Preferably, the crystal is formed of scintillator material which has well-defined cleavage planes. For example, cadmium tungstate, zinc tungstate, and sodium iodide activated with thallium may be used. It is further preferable that the cleaving is performed at locations of the crystal to produce equal-width elements.

More specifically, the subject invention comprises a method of forming individual elements for a crystal array using a crystal (i) having length and height dimensions at least equal to the length and height requirements of the array, (ii) having a width substantially greater than the width of any individual element of the array, and (iii) having a cleavage plane perpendicular to a line defining the width of the crystal, the method comprising the step of cleaving the crystal at multiple points along the line of width to separate the crystal into individual elements of the array.

The present invention further comprises a method of forming an array of crystal elements comprising the steps of (a) cleaving a crystal to form individual elements; and (b) bonding the individual elements into an array. Again, preferably, the crystal is formed of scintillator material. Moreover, it is preferable that the method of forming an. array include the step of positioning an optical barrier such as reflective material between the elements prior to the step of bonding. This method also preferably includes the step of aligning the sides of the elements formed by the step of cleaving to oppositely face another such side of another such element prior to the step of bonding.

Finally, the subject invention also extends to the resultant array formed by the above indicated methods comprised of elements formed by cleaving a crystal.

Some embodiments of the invention will now be described by way of example with reference to the accompanying drawings in which:

Figure 1 illustrates a crystal block employed in accordance with the teachings of the present invention;

Figure 2 illustrates an array formed in accordance with the teachings of the present invention;

Figure 3 illustrates another crystal block employed in accordance with the teachings of the present invention;

Figure 4 illustrates an element formed from the crystal block of Figure 3, and

Figure 5 illustrates an array formed in accordance with the teachings of the present invention.

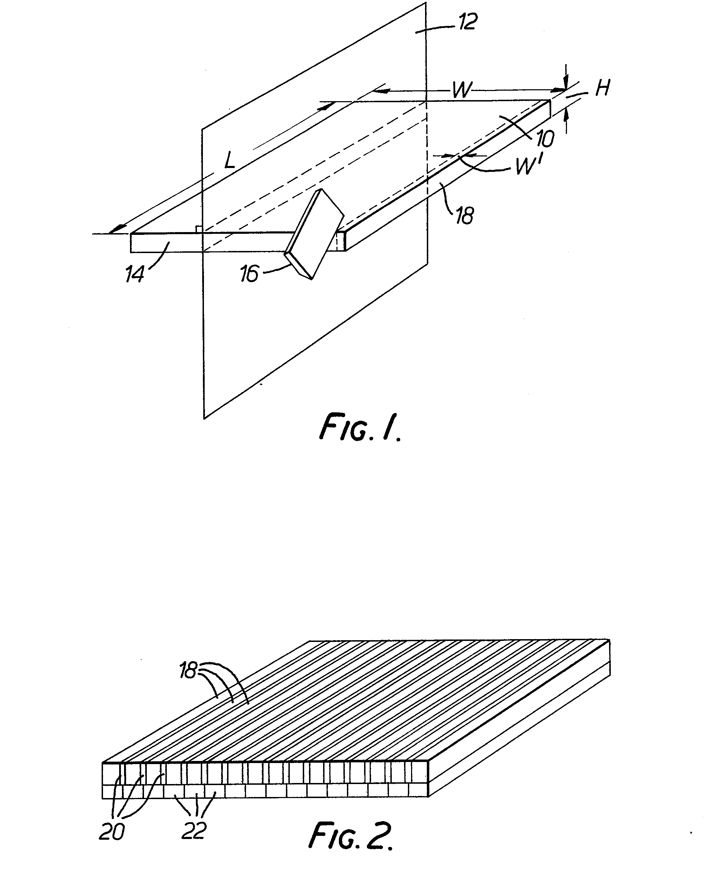

Simply stated, the subject invention comprises the process of cleaving a crystal block to produce elements employed in a segmented crystal array. For example, there is illustrated in Figure 1 a crystal 10 having a length L and height H, which are at least equal to the length and height requirements of the array to be formed. Crystal 10 also has a width W substantially greater than the width of any individual element of the array to be formed. Moreover, in accordance with the present invention, crystal 10 has a well-defined cleavage plane 12 which is perpendicular to a line which defines the width of crystal 10, such as edge 14. Accordngly, by placing the sharp edge of a cleaving knife 16 along edge 14 of crystal 10, an element 18 may be formed having a width W', a length L and a height H.

Crystal 10 preferably has a cubic structure, and is formed of scintillator material which may be cadmium tungstate, zinc tungstate, and sodium iodide activated with thallium. However, the process of forming crystalline elements using the teachings of the subject invention has application to other forms of segmented crystal arrays, and specifically arrays which comprise detectors of radiation, light, and the like.

When crystal 10 is chosen to be a cubic crystal with a well-defined cleavage plane 12 positioned perpendicular to an edge thereof and perpendicular to the major surface thereof, the resultant elements formed by cleaving may be directly assembled into an array without any further grinding, polishing, or lapping processes, since the resultant cleaved surfaces have a better total internal reflection quality than a polished surface.

An array comprising a plurality of elements 18 is illustrated in Figure 2. As shown, elements 18 are aligned such that the sides of each element 18 formed by a step of cleaving oppositely face another such side of another such element 18. Optical barriers, preferably reflective materials such as foil layers 20, are inserted between elements 18 prior to bonding. Individual photodetectors 22 are each located under a corresponding element 18. Accordingly, when element 18 comprises a scintillator material, the resultant structure of Figure 2 comprises an array of scintillator material such that a radiation emission striking the top surface of any given element 18 will result in the generation of light through activation of that element which in turn will result in generation of an output signal through activation of the corresponding photodetector 22.

It should be understood that knife 16 need not be applied to crystal 10 along edge 14, but might be applied anywhere along a cleavage plane at which it is desired to form an edge of an element. Moreover, it should be understood that although a crystal 10 as illustrated in Figure 1 as having a length L and a height H equal to the length and height of the resultant elements 18, other sizes of crystals might be employed either to produce an array of different-length elements, or to produce elements which need to be subsequently machined in order to form an array of uniform length elements. In either event, the width of each such element may be precisely controlled, and highly reflective cleaved surfaces are formed. Moreover, although it is preferable that each of elements 18 have a uniform width W', it is obviously possible to produce elements of varying width depending upon the positioning of knife 16 along edge 14.

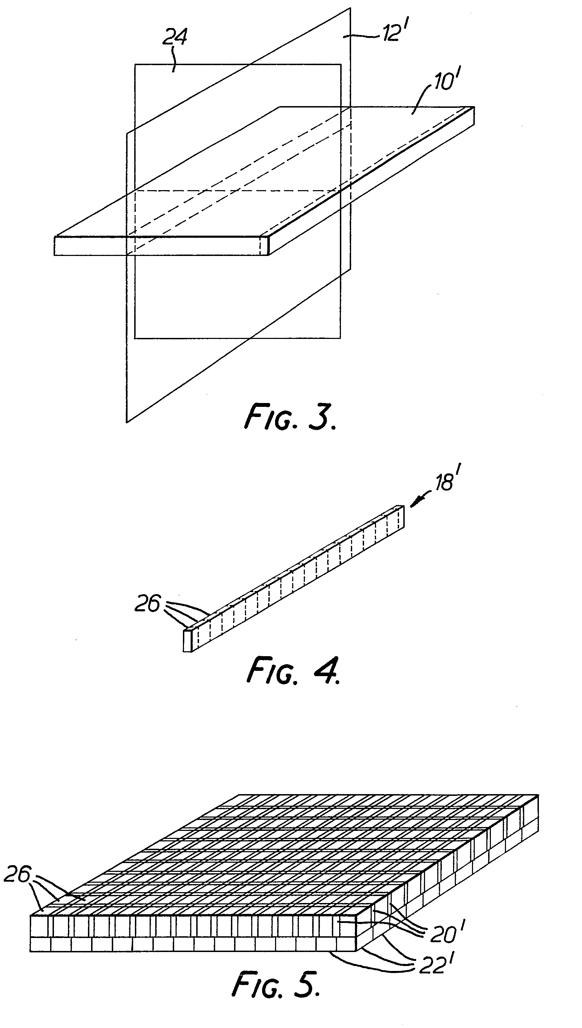

In Figure 3 a crystal 10' is illustrated which has a first well-defined cleavage plane 12' positioned perpendicular to an edge thereof and perpendicular to the major surface thereof. Crystal 10' has a second well-defined cleavage plane 24 positioned perpendicular to plane 12' and perpendicular to the major surface. Accordingly, crystal 10' may be used to produce crystal elements whose length and width are both determined by cleaving; first along a plane 12' to produce an element 18' of Figure 4, and second along planes 24' to produce smaller elements 26.

An array comprising a plurality of elements 26 is illustrated in Figure 5. As shown, elements 26 are aligned such that the sides of each element 26 formed by a step of cleaving oppositely face another such side of another such element 26. Optical barriers, preferably reflective materials such as foil layers 20', are inserted between elements 26 prior to bonding. Individual photodetectors 22' are located under a corresponding element 26.

In summary, the subject invention provides a method for forming individual elements of a crystal array simply with the use of a cleaving knife, without the requirement of more complex circular or wire saws, diamond slurries, or polishing machines required in conventional processes. The method of the present invention takes a fraction of the time required by conventional methodologies. The exactness of segment size is only limited by the precision by which the knife can be located and by the precision of the structure of the crystal. Properties of individual segments of an array are smooth continuations of adjacent segments. There is, therefore, no "kerf gap" in property distribution throughout the array. Additionally, the crystals producing the array are subject to a minimum of machining stress during the manufacturing process. Moreover, the cleanly-cleaved surfaces have better total internal reflection than known prior art polished surfaces. Still further, the methodology of the subject invention eliminates kerf loss and eliminates polishing loss.

Although the process of the present invention is limited to crystals having well-defined cleavage planes and preferably cubic crystals, since no fluids are utilised, soluble crystals may be cut using the teachings of the present invention. Finally, there are no harmful debris from wasteful materials such as sawdust, contaminated slurries, or other machining fluids or cleaning solutions, thereby minimising the amount of handling and cleaning required.

CLAIMS

1.        A method of forming individual elements for a crystal array comprising the step of cleaving a crystal to form said elements.

2.        A method of forming individual elements for a crystal array using a crystal (i) having length and height dimensions at least equal to the length and height requirements of said array, (ii) having a width substantially greater than the width of any individual element of said array, and (iii) having a cleavage plane perpendicular to a line defining the width of said crystal, comprising the step of cleaving said crystal at multiple points along said line to separate said crystal into said individual elements of said array.

3.        A method of forming an array of crystal elements comprising the steps of:
        (a) cleaving a crystal to form individual elements; and
        (b) bonding said individual elements into an array.

4.        The method of any preceding claim wherein said crystal is formed of scintillator material.

5.        The method of claim 4 including the step of positioning an optical barrier between said elements prior to said step of bonding.

6.        The method of claim 5 wherein said optical barrier is a reflective material.

7.        The method of claim 4 including the step of aligning the sides of said elements formed by said step of cleaving to oppositely face another such side of another such element prior to said step of bonding.

8.      The method of any preceding claim wherein said material is cadmium tungstate, zinc tungstate, or sodium iodide activated with thallium.

9.      The method of any preceding claim wherein said elements are of equal width.

10.      The method of any preceding claim wherein said crystal is cubic in structure.

11.      An array comprising elements formed by the method of any of claims 3 to 7 or by the method of any of claims 8 to 10 as dependent upon any of claims 3 to 7.

1/2

0128659

FIG. 1.

FIG. 2.

2/2

0128659

*Fig. 3.*

*Fig. 4.*

*Fig. 5.*

0128659

European Patent
Office

EUROPEAN SEARCH REPORT

Application number

EP 84 30 3041

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| E | EP-A-0 112 475 (TOKYO SHIBAURA DENKI K.K.) * Abstract; page 5, line 12 - page 6, line 30; page 6, line 34 - page 7, line 3; page 7, line 37 - page 8, line 23; page 9, lines 5-20; claims 1,2,7; figures 1-6 * | 1-11 | G 01 T 1/00 G 01 T 1/202 G 01 T 1/164 |
| Y | GB-A-2 045 795 (HITACHI LTD.) * Abstract; page 2, line 53 - page 3, line 32; figures 2-4 * | 1-11 | |
| Y | GB-A-2 072 452 (NATIONAL INSTITUTE RADIOLOGICAL SCIENCES) * Abstract; page 1, line 110 - page 2, line 15; page 2, line 126 - page 3, line 48; figures 1,4,6-17 * | 1-11 | |
| | | | TECHNICAL FIELDS SEARCHED (Int. Cl. ³) |
| A | IEEE TRANSACTIONS ON NUCLEAR SCIENCE, vol. NS-29, no. 3, June 1982, pages 1237-1249, IEEE, New York, US; M.R. FARUKHI: "Recent developments in scintillation detectors for X-ray CT and positron CT applications" * Page 1237, summary; page 1248, table 5 * | 1,4,8, 10 | G 01 T |

--- -/-

The present search report has been drawn up for all claims

| Place of search THE HAGUE | Date of completion of the search 29-08-1984 | Examiner DATTA S. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82

# European Patent Office

## EUROPEAN SEARCH REPORT

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl. 3) |
|---|---|---|---|
| A | PATENTS ABSTRACTS OF JAPAN, vol. 7, no. 67 (P-184)[1212], 19th March 1983; & JP - A - 57 211 572 (HITACHI KASEI KOGYO K.K.) 25-12-1982 * Abstract * | 1,8 | |
| | ----- | | |
| | | | TECHNICAL FIELDS SEARCHED (Int. Cl. 3) |

The present search report has been drawn up for all claims

| Place of search | Date of completion of the search | Examiner |
|---|---|---|
| THE HAGUE | 29-08-1984 | DATTA S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82